# EUROPEAN PATENT SPECIFICATION

(11) **EP 4 293 830 B1**
(45) Date of publication and mention of the grant of the patent: **06.05.2026**
(21) Application number: 21925114.7
(22) Date of filing: 22.11.2021
(51) Int. Cl.: H01Q 19/10, H01Q 1/38, G01S 7/02, G01S 7/03, G01S 13/42, G01S 13/931, E05F 15/73, H01Q 1/22, H01Q 1/32

(54) **DETECTING DEVICE AND OPENING AND CLOSING UNIT CONTROL SYSTEM, AND PASSENGER DETECTING SYSTEM**
DETEKTIONSVORRICHTUNG, STEUERUNGSSYSTEM FÜR ÖFFNUNGS- UND SCHLIESSEINHEIT UND PASSAGIERDETEKTIONSSYSTEM
DISPOSITIF DE DÉTECTION, SYSTÈME DE COMMANDE D'UNITÉ D'OUVERTURE ET DE FERMETURE, ET SYSTÈME DE DÉTECTION DE PASSAGER

(30) Priority: 12.02.2021 JP 2021020998
(43) Date of publication of application: 20.12.2023
(73) Proprietor: Alps Alpine Co., Ltd., Tokyo 145-8501 (JP)
(72) Inventor: TAKAOKA, Hiroyuki, Tokyo 145-8501 (JP); IKEDA, Tomoki, Tokyo 145-8501 (JP); UTTALVEROFF, Benjamin, Tokyo 145-8501 (JP); KATO, Yuki, Tokyo 145-8501 (JP); SHIBAYAMA, Takamitsu, Tokyo 145-8501 (JP); OTAKI, Yukio, Tokyo 145-8501 (JP); SANO, Takashi, Tokyo 145-8501 (JP)
(74) Representative: Schmitt-Nilson Schraud Waibel Wohlfrom Patentanwälte Partnerschaft mbB
(86) International application number: PCT/JP2021/042849
(87) International publication number: WO 2022/172553

(56) References cited:
- WO-A1-2020/234589
- CA-A1- 2 967 967
- CN-A- 105 609 968
- JP-A- 2000 082 919
- JP-A- 2004 282 524
- JP-A- 2004 332 250
- JP-A- 2017 034 644
- JP-A- 2017 126 118
- JP-A- 2019 097 119
- JP-A- 2020 019 310
- JP-A- 2020 060 484
- JP-A- 2020 513 181
- JP-A- H08 320 375
- US-A1- 2010 188 309

## Description

### Technical Field

The present invention relates to a detection device, an opening/closing unit control system, and an occupant detection system.

### Background Art

There is conventionally a vehicle-mounted radar device that has a millimeter-wave radar and a reflecting mirror that reflects transmission and reception waves of the millimeter-wave radar. The reflecting mirror is a half-truncated cone body the radius of which is longer than the height. A side surface of the half-truncated cone body is a reflecting surface. The reflecting surface is a concavely curved surface formed by curving the generating line of the truncated cone toward the bottom face (see PTL 1, for example).

### Citation List

### Patent Literature

PTL 1: Japanese Unexamined Patent Application Publication No. 2010-154182
The patent application WO2020234589A1 discloses an antenna array assembly comprising a ground plate, a linear array of patch radiator elements disposed in a spaced parallel relationship with a first face of the ground plate, and a first and second elongate passive radiator, each comprising a plurality of conductive parts, each disposed to be generally upstanding in relation to the first face of the ground plate and being electrically isolated from the ground plate. The first and second elongate passive radiators are disposed symmetrically on either side of the linear array and parallel to a centre line of the linear array, on the same side of the ground plate as the linear array. At least some of the conductive parts of a respective elongate passive radiator are disposed in an arrangement having parallel ridges and grooves, in which, in a cross section in a plane parallel to the first face of the ground plate, the ridges extend towards the linear array and the grooves extend away from the linear array.

US 2010/188309 A1 and JP 2017 034644 A are related to vehicular radar sensors comprising antennas with reflectors.

CA 2 967 967 A1 is related to a communication system comprising a convexly shaped reflector.

CN 105 609 968 A is related to a V-shaped reflector for a dielectric resonator antenna.

### Summary of Invention

### Technical Problem

When a reflecting surface is designed so that the distribution of reflected waves becomes more superior, a reflecting surface with the generating line of a half-truncated cone body curved toward the bottom face, as with the reflecting surface of the reflecting mirror of the conventional vehicle-mounted radar device, has a complex shape and is not easy to design.

Therefore, an object is to provide a detection device according to claim 1, comprising an antenna device having a reflector that has a simple structure and is easy to design, a detection device, an opening/closing control system, and an occupant detection system.

### Solution to Problem

A detection device according to claim 1 comprises an antenna device in an embodiment of the present invention includes: a circuit board; an antenna placed on a surface of the circuit board; and a reflector that is erected on the surface of the circuit board and extends along the surface. The reflector has: a curved portion that has a convexly curved surface, which is curved at a certain curvature and protrudes toward the same side as the antenna, the convexly curved surface reflecting radio waves emitted by the antenna; and a first plane portion and a second plane portion that respectively have a first reflecting surface and a second reflecting surface that extend from both side portions of the convexly curved surface along the surface of the circuit board, form a V shape together with the convexly curved surface in plan view, and reflect radio waves emitted by the antenna. The convexly curved surface has a shape equivalent to a portion on the outer circumferential surface of a cylinder, the portion being included in a certain azimuth angle from a cylindrical axis. The convexly curved surface is inclined toward the same side as the antenna with respect to the circuit board.

### Advantageous Effects of Invention

It is possible to provide an antenna device having a reflector that has a simple structure and is easy to design, a detection device, an opening/closing control system, and an occupant detection system.

### Brief Description of Drawings

[Fig. 1] Fig. 1 is a drawing indicating a detection device 100 in an embodiment.
[Fig. 2] Fig. 2 is an exploded view of the detection device 100.
[Fig. 3] Fig. 3 is a drawing indicating the detection device 100 and an antenna device 100A.
[Fig. 4] Fig. 4 is a drawing indicating the detection device 100 and antenna device 100A.
[Fig. 5] Fig. 5 is a drawing indicating the detection device 100 and antenna device 100A.
[Fig. 6] Fig. 6 is a drawing indicating the detection device 100 and antenna device 100A.
[Fig. 7] Fig. 7 is a drawing indicating a curved portion 131.
[Fig. 8] Fig. 8 is a drawing indicating a cross section along A-A in Fig. 4.
[Fig. 9] Fig. 9 is a drawing indicating a cross section along B-B in Fig. 4.
[Fig. 10] Fig. 10 is a drawing indicating an evaluation coordinate system for the detection device 100.
[Fig. 11] Fig. 11 is a drawing indicating simulation results for emission strength of the detection device 100.
[Fig. 12] Fig. 12 is a drawing indicating simulation results for emission strength of the detection device 100.
[Fig. 13] Fig. 13 is a drawing indicating emission strength of the detection device 100.
[Fig. 14] Fig. 14 is a drawing indicating actual measurement results for the characteristics of emission strength with respect to the azimuth angle of the detection device 100.
[Fig. 15] Fig. 15 is a drawing indicating simulation results obtained in combinations of various radius vectors R and various angles θ of the letter V.
[Fig. 16] Fig. 16 is a drawing indicating the width W of the curved portion 131 and a relationship between the width W and the radius vector R.

### Description of Embodiments

An embodiment to which an antenna device, a detection device, an opening/closing unit control system, and an occupant detection system in the present invention are applied will be described below. Descriptions will be given below with an XYZ coordinate system defined. A direction (X direction) parallel to the X axis, a direction (Y direction) parallel to the Y axis, and a direction (Z direction) parallel to the Z axis are mutually orthogonal. Also, in the description below, the -Z-direction side may be referred to as the lower side or bottom, and the +Z-direction side may be referred to as the upper side or top, for convenience of explanation. Also, "in plan view" will refer to an XY plane being viewed. Also, in the description below, for easy understanding of the structure, the length, bulkiness, thickness, and the like of each portion may be indicated by being exaggerated. Also, "parallel", "above", "below", and other words will allow incorrectness to the extent that effects of the embodiment are not lost.

### <Embodiment>

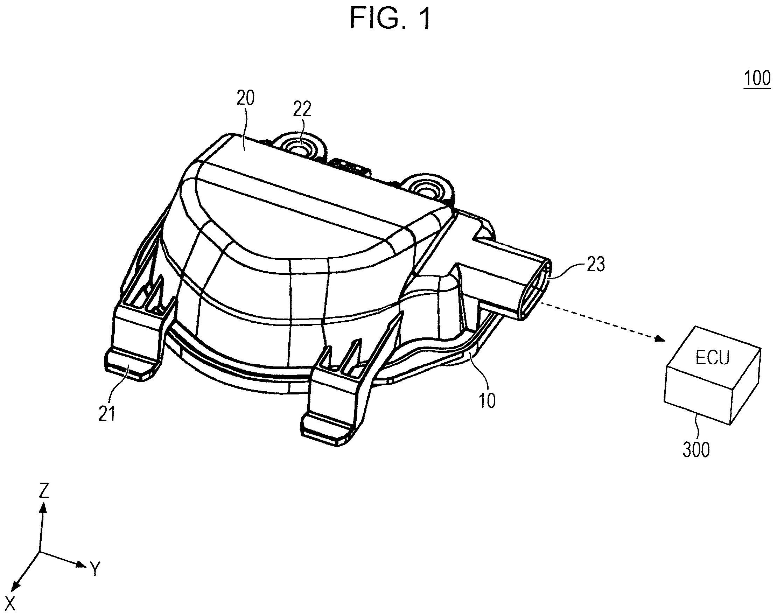

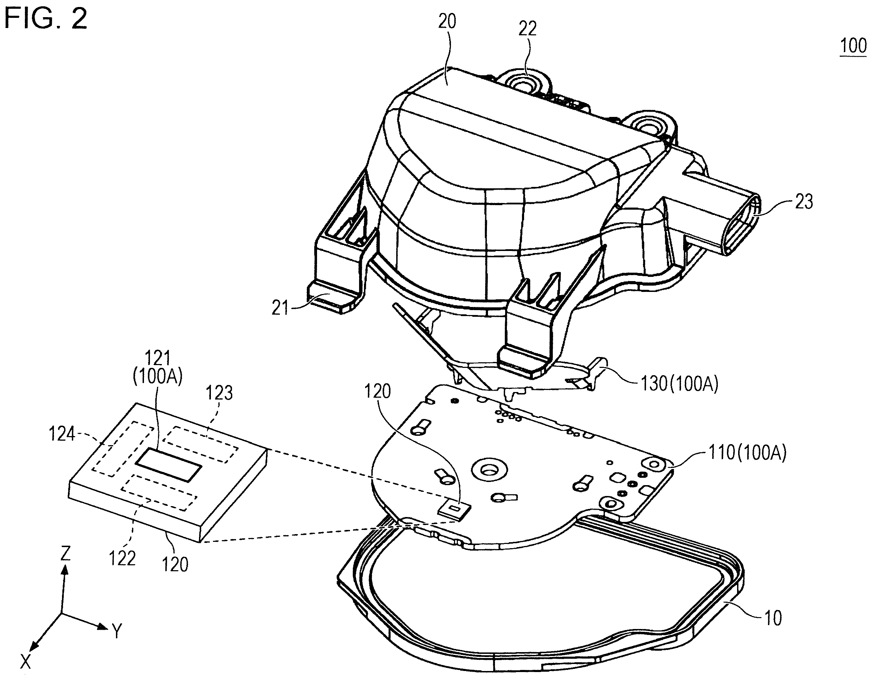

Fig. 1 is a drawing indicating a detection device 100 in an embodiment. In Fig. 1, an ECU (Electronic Control Unit) 300 is also indicated. Fig. 2 is an exploded view of the detection device 100. The detection device 100 includes a lower case 10, an upper case 20, a circuit board 110, a transmission and reception device 120, and a reflector 130. The transmission and reception device 120 has an antenna 121, a transmission circuit 122, a reception circuit 123, and a control unit 124.

The detection device 100 includes at least the circuit board 110, transmission and reception device 120, and reflector 130. An antenna device 100A in the embodiment includes at least the circuit board 110, antenna 121, and reflector 130. In Fig. 2, therefore, the reference characters 100A are indicated in parentheses for the circuit board 110, antenna 121, and reflector 130.

The lower case 10 and upper case 20, which are an example of a cabinet, become a case having a sealed internal space by being aligned and engaged. In the internal space in the case formed with the lower case 10 and upper case 20, the circuit board 110, transmission and reception device 120, and reflector 130 are stored. Like this, with the detection device 100, the circuit board 110, transmission and reception device 120, and reflector 130 are packaged by being stored in the lower case 10 and upper case 20.

As an example, the upper case 20 has engagement portions 21, screw holes 22, and a connector 23. The engagement portions 21 and screw holes 22 are an example of an attachment portion that can attach the case formed with the lower case 10 and upper case 20 at a lower portion of a door of a vehicle, inside the bumper, or in the interior of the room of the vehicle. The connector 23 has terminals to be connected to the transmission and reception device 120 through the circuit board 110. The connector 23 is connected to the ECU 300 in the vehicle through, for example, LIN (Local Interconnect Network) or CAN (Controller Area Network) mounted in the vehicle. Thus, the detection device 100 is connected to the ECU 300 through the connector 23.

As an example, the detection device 100 like this can be used as an operation detection device for an electric opener for an opening/closing portion of the trunk lid, the rear gate, a slide door, or the like of a vehicle. In this case, the detection device 100 detects the presence or motion of the toes of the user of the vehicle below the rear bumper. The user who inserts the toes below the rear bumper is an example of a manipulator present around a vehicle.

The electric opener is a device that performs unlocking of a lock and driving of an actuator that opens and closes an opening/closing portion of a trunk lid, a rear gate, a slide door, or the like. Here, when the ECU 300 is a control unit that controls the opening and closing of an opening/closing portion of a vehicle according to a detection result of the detection device 100, a system including the detection device 100 and ECU 300 is an opening/closing control system. Also, when the ECU 300 is an occupant detection unit that detects the presence or absence of an occupant in the room of a vehicle according to a detection result of the detection device 100, a system including the detection device 100 and ECU 300 is an occupant detection system.

When the detection device 100 is used as an operation detection device for an electric opener for the trunk lid or rear gate of a vehicle, the detection device 100 is provided, as an example, inside the rear bumper of the vehicle at the center in the width direction of the vehicle. In this case, the +X direction is the vertically downward direction, the -X direction is the vertically upward direction, the +Y direction is on the right side in the travel direction of the vehicle, the -Y direction is on the left side in the travel direction of the vehicle, the +Z direction is the backward of the vehicle, and the +Z direction is the forward of the vehicle. The detection device 100 emits radio waves in the +X direction, receives reflected waves, and detects, in the +X direction, the presence of a detection target or the behavior of the detection target.

An aspect will be described below in which, as an example, the detection device 100 is provided inside the rear bumper of a vehicle and detects the presence or motion of the toes of the user who is going to operate the electric opener of the trunk lid or rear gate. That is, in the description below, the detection target of the detection device 100 is the toes of the user, as an example.

The detection device 100 detects, in the +X direction, the presence of the detection target or the behavior of the detection target by emitting radio waves in the +X direction and receiving reflected waves. A timing to receive a reflected wave differs between a case in which the toes of the user, which are the detection target, are not present below the detection device 100 and a case in which the toes are present. Therefore, the detection device 100 detects at least one of the presence of the toes and a behavior in which the toes have been inserted below the detection device 100.

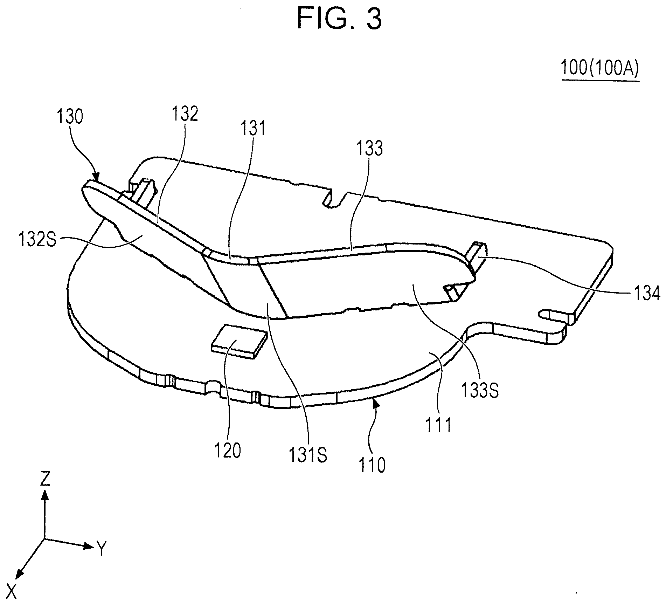

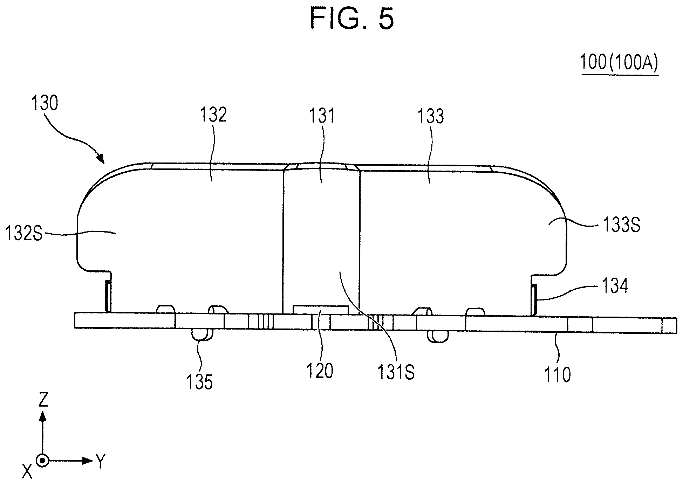

Next, details of the structures of the circuit board 110, transmission and reception device 120, and reflector 130 will be described. Here, the structures will be described by using Fig. 3 to Fig. 6, in addition to Fig. 1 and Fig. 2. Fig. 3 to Fig. 6 are drawings indicating the detection device 100 and antenna device 100A. In Fig. 3 to Fig. 6, the circuit board 110, transmission and reception device 120, and reflector 130 are indicated.

The circuit board 110 has a shape matching the shapes of the lower case 10 and upper case 20 in plan view, as indicated in Fig. 2 to Fig. 4. The circuit board 110 is, for example, is a wiring board complying with the FR4 (Flame Retardant type 4) standard or the like. The transmission and reception device 120 and reflector 130 are mounted on the upper surface 111 of the circuit board 110. The control unit 124 (see Fig. 2) of the transmission and reception device 120 is connected to the terminals of the connector 23 (see Fig. 1 and Fig. 2) through wires on the circuit board 110. The circuit board 110 is fixed in the interior of the upper case 20 with screws or the like, as an example.

The transmission and reception device 120 has the antenna 121, transmission circuit 122, reception circuit 123, and control unit 124 as indicated in Fig. 2 by being enlarged, and is mounted on the upper surface 111 of the circuit board 110 as indicated in Fig. 2 to Fig. 6. Portions of the transmission circuit 122, reception circuit 123, and control unit 124 in the transmission and reception device 120 are implemented as a so-called IC (Integrated Circuit) chip.

The antenna 121 is provided on the upper surface of the IC chip and is connected to the transmission circuit 122 and reception circuit 123. The antenna 121 is a patch antenna as an example, and is an antenna that doubles as a transmission antenna for transmitting radio waves and a reception antenna for receiving radio waves. The antenna 121 can transmit and receive millimeter-waves at 60.5 GHz, as an example.

The transmission circuit 122 and reception circuit 123 are integrally formed in an analog integrated circuit included in the IC chip. Also, the transmission circuit 122 and reception circuit 123 are connected to the control unit 124, and their operations are controlled by the control unit 124. The transmission circuit 122 outputs a transmission signal to the antenna 121 in response to a transmission command output from the control unit 124. The reception circuit 123 receives a reflected wave, which is a transmission signal reflected at the detection target.

The control unit 124 represents functions implemented by a computer included in the IC chip. The control unit 124 has functions used as a detection unit that detects at least one of the presence and behavior of the detection target according to a signal received by the reception circuit 123.

The reflector 130 is erected on the upper surface 111 of the circuit board 110 as indicated in Fig. 3 to Fig. 6. Erection on the upper surface 111 refers to provision in an erected state on the upper surface 111 or provision in a standing state on the upper surface 111. The reflector 130 is provided so as to be inclined with respect to the upper surface 111. Details of this will be described later.

The reflector 130 has a curved portion 131, flat plate portions 132 and 133, fixing portions 134, and engaging portions 135. The flat plate portion 132 is an example of a first plane portion, and the flat plate portion 133 is an example of a second plane portion. The curved portion 131 and flat plate portions 132 and 133 extend along the upper surface 111 of the circuit board 110. The reflector 130 reflects radio waves emitted by the antenna 121 toward the +X-direction side. Also, the reflector 130 reflects radio waves reflected on the detection target toward the antenna 121.

Since the reflector 130 is provided in the interior of the rear bumper of the vehicle at the center of the width direction of the vehicle, the reflector 130 demanded to enable the reflected wave to reach a farther distance in a lower left direction and lower right direction of the rear bumper of the vehicle. This is to enable the toes of the user to be detected in a wider range in the left-right direction.

The distance from the reflector 130 to a toe is longer in a case in which the toe is positioned immediately below the reflector 130 than in a case in which the toe is at a lower left position and at a lower right position. Therefore, the reflector 130 is structured so that it can reflect radio waves farther in a lower left direction, which is on the -Y-direction side in the +X direction and in a lower right direction, which is on the + Y-direction side in the +X direction.

To prolong the reach distance on the -Y-direction side in the +X direction (in a lower left direction) and on the + Y-direction side in the +X direction (in a lower right direction), highly precise design to prolong the reach distance is demanded to be possible. To achieve this, the reflector 130 of the antenna device 100A and detection device 100 in this embodiment has a relatively simple structure.

The curved portion 131 has a convexly curved surface 131S, which is curved at a certain curvature and protrudes toward the same side as the transmission and reception device 120 having the antenna 121 (see Fig. 2). The convexly curved surface 131S is the reflecting surface of the curved portion 131. The curved portion 131 has a shape in which a flat plate is curved. The convexly curved surface 131S has a shape equivalent to a portion on the outer circumferential surface of a cylinder, the portion being included in a certain azimuth angle from a cylindrical axis. The curved portion 131 is inclined toward the same side as the transmission and reception device 120 having the antenna 121 (see Fig. 2), with respect to the upper surface 111 of the circuit board 110.

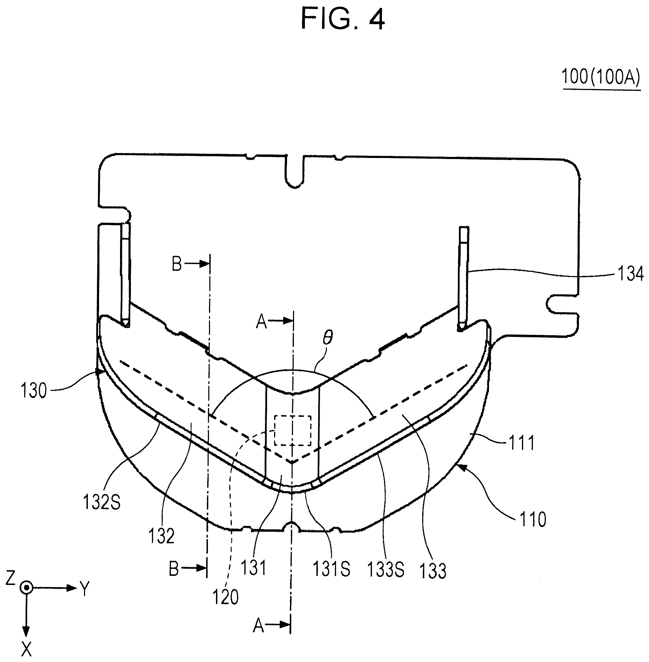

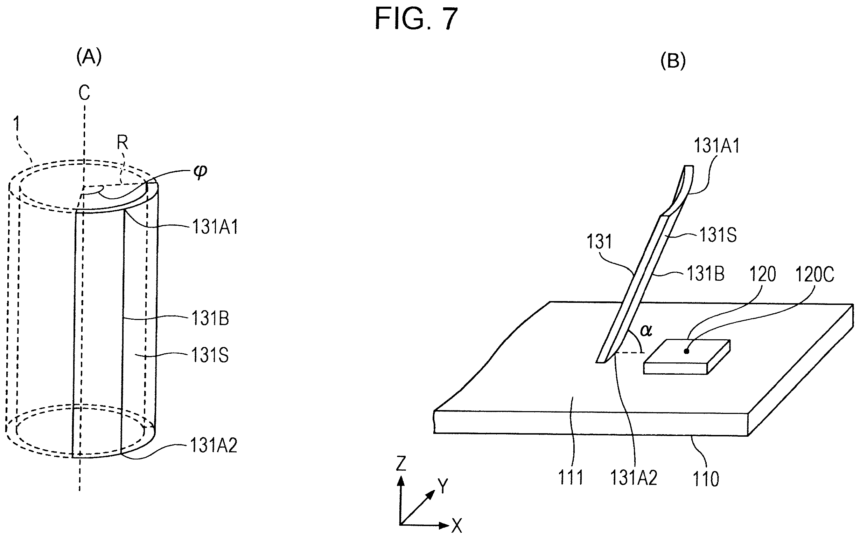

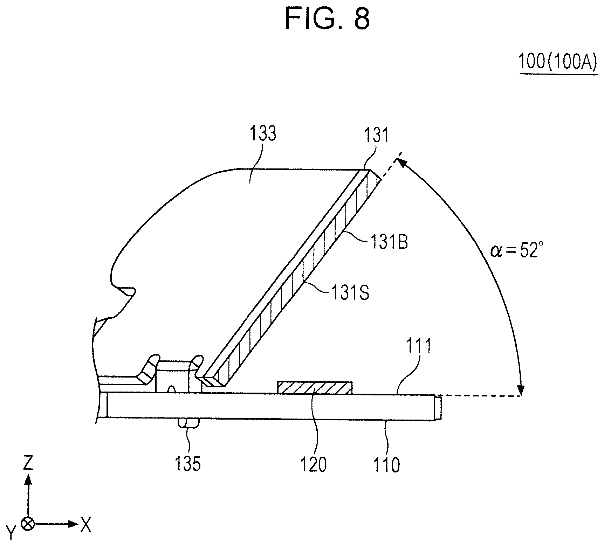

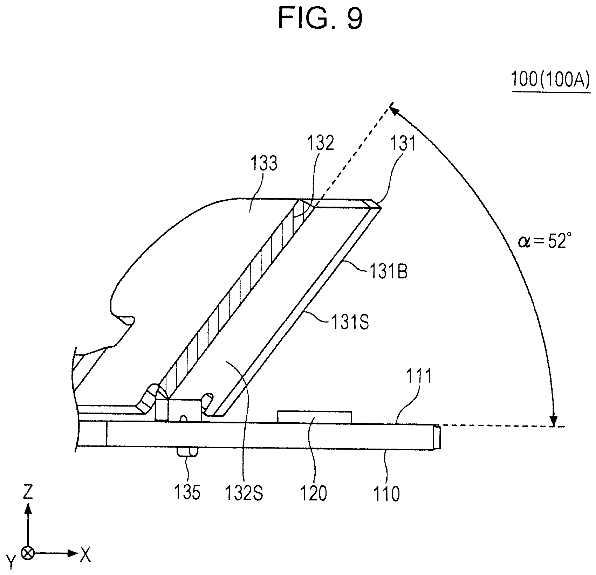

Here, to explain the shape of the curved portion 131, Fig. 7 to Fig. 9 will be used in addition to Fig. 3 to Fig. 6. Fig. 7 is a drawing indicating the curved portion 131. In Fig. 7, only the curved portion 131 in the reflector 130 is extracted and indicated; and a cylinder 1 including the curved portion 131, the cylinder 1 being vertical, is indicated. Fig. 8 is a drawing indicating a cross section along A-A in Fig. 4. Fig. 9 is a drawing indicating a cross section along B-B in Fig. 4.

As indicated in Fig. 7(A), the curved portion 131 is a portion on the cylinder 1 having a radius vector R and a cylindrical axis C, the portion being included within an azimuth angle φ with respect to the cylindrical axis C. The azimuth angle φ is an example of a certain azimuth angle. The curved portion 131 has a vertex 131A1 of an arc, the vertex 131A1 being at the upper end of the convexly curved surface 131S, a vertex 131A2 of the arc, the vertex 131A2 being at the lower end of the convexly curved surface 131S, and a straight line 131B linking the vertex 131A1 and vertex 131A2 together. The straight line 131B is positioned on the convexly curved surface 131S and is parallel to the cylindrical axis C. The straight line 131B is a straight line equivalent to the generating line of the cylinder 1.

As indicated in Fig. 7(B), the curved portion 131 is placed on the upper surface 111 so that the straight line 131B linking the vertex 131A1 and vertex 131A2 together is positioned on a plane parallel to an XZ plane and passing through the center 120C of the upper surface of the transmission and reception device 120 and that the straight line 131B is inclined toward the same side as the transmission and reception device 120. Since the straight line 131B is inclined toward the same side as the transmission and reception device 120, the convexly curved surface 131S is inclined toward the same side as the transmission and reception device 120. The center 120C is equivalent to the center of the surface of the antenna 121 (see Fig. 2).

The curved portion 131 is inclined so that the angle formed by the upper surface 111 and the straight line 131B linking the vertex 131A1 and vertex 131A2 together becomes an angle α on a plane parallel to an XZ plane and passing through the center 120C of the transmission and reception device 120. Although the convexly curved surface 131S has a shape in which the convexly curved surface 131S is curved in the circumferential direction as with the outer circumferential surface of the cylinder 1, but is not curved in a direction parallel to the cylindrical axis C and straight line 131B.

In this embodiment, the angle α is 52 degrees as an example, as indicated in Fig. 8. The curved portion 131 like this is relatively easy to design. The curved portion 131 can be manufactured by bending a flat plate to a radius R of curvature along the cylindrical axis C, which is vertical. Incidentally, the angle α is not limited to 52 degrees. The angle α is an acute angle (an angle greater than 0 degree and smaller than 90 degrees).

As indicated in Fig. 4, the curved portion 131 overlaps the transmission and reception device 120 in plan view, as an example. Here, an aspect is indicated in which the curved portion 131 overlaps the whole of the transmission and reception device 120. However, the curved portion 131 preferably overlaps at least part of the transmission and reception device 120 in plan view. This is because radio waves emitted from the antenna 121 (see Fig. 2) of the transmission and reception device 120 can be efficiently reflected. Incidentally, when, for example, the antenna 121 emits radio waves toward the same side as the curved portion 131 with respect to the vertically upward direction, the curved portion 131 may not overlap the transmission and reception device 120 in plan view.

Both of the flat plate portions 132 and 133 are a portion in a flat plate shape (plate-like), and respectively have surfaces 132S and 133S on the +X-direction side, as indicated in Fig. 3, Fig. 5, and Fig. 6. The surfaces 132S and 133S are the reflecting surfaces of the flat plate portions 132 and 133. The surface 132S is an example of a first reflecting surface, and the surface 133S is an example of a second reflecting surface.

The surfaces 132S and 133S extend from both side portions of the convexly curved surface 131S in the circumferential direction along the upper surface 111 of the circuit board 110, and form a V shape together with the convexly curved surface 131S in plan view as indicated by the broken lines in Fig. 4. The angle (interior angle) θ of the V shape formed by the surfaces 132S and 133S is 120 degrees, as an example. The angle θ is preferably greater than or equal to 90 degrees.

The flat plate portion 132 is provided continuously from the side portion of the curved portion 131 on the -Y-direction side in the circumferential direction, and the flat plate portion 133 is provided continuously from the side portion of the curved portion 131 on the +Y-direction side in the circumferential direction. Therefore, the surface 132S is a surface continuous from the end of the convexly curved surface 131S on the -Y-direction side, and the surface 133S is a surface continuous from the end of the convexly curved surface 131S on the +Y -direction side.

Therefore, when the cross section, of the flat plate portion 132, taken along a plane parallel to an XZ plane is viewed as indicated in Fig. 9, the angle formed by the surface 132S and upper surface 111 is α, so the angle is equal to the angle α formed by the upper surface 111 and the straight line 131B of the curved portion 131. This is because in an XZ plane, the flat plate portion 132 is inclined at the same angle as the curved portion 131 with respect to the upper surface 111. Here, the angle α is 52 degrees, as an example.

Also, since the flat plate portion 132 and flat plate portion 133 have a symmetric shape (plane symmetry), in which they are mutual mirror images, with respect to a plane that includes the straight line 131B of the curved portion 131 and is parallel to an XZ plane, when the cross section, of the flat plate portion 133, taken along a plane parallel to an XZ plane is viewed, the angle formed by the surface 133S and upper surface 111 is α, so the angle is equal to the angle α formed by the upper surface 111 and the straight line 131B of the curved portion 131.

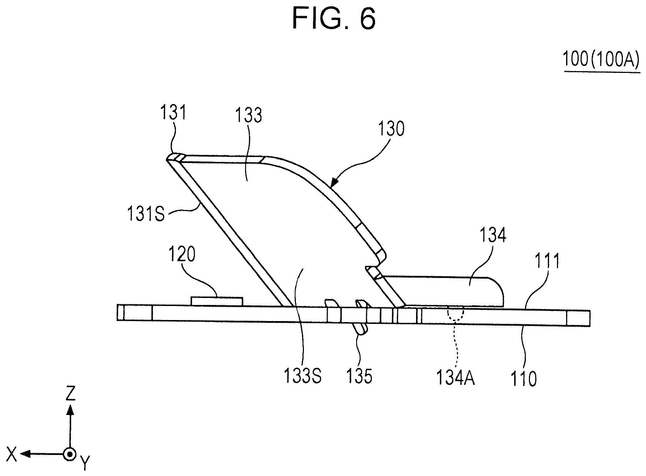

The two fixing portions 134 are a portion extending from an end of the flat plate portion 132 on the -Y-direction side and a portion extending from an end of the flat plate portion 133 on the +Y-direction side. The fixing portions 134 extend in the -X direction. The fixing portions 134 are provided to stably fix the reflector 130 on the upper surface of the circuit board 110, and have convex portions 134A (see Fig. 6) protruding downward. The convex portions 134A are inserted into through-holes passing through the circuit board 110 in the thickness direction (Z direction), and are fixed to the circuit board 110 with an adhesive or the like.

The two engaging portions 135 are portions extending from the lower ends of the flat plate portion 132 and flat plate portion 133. The engaging portion 135 is inserted into a through-hole passing through the circuit board 110 in the thickness direction (Z direction), and is fixed to the circuit board 110 with an adhesive or the like.

With the reflector 130 as described above, a direction in which the +X direction is viewed from the vertexes 131A 1 and 131A2 in plan view is the direction of the front of the reflector 130 and is the direction of the fronts of the antenna device 100A and detection device 100.

The reflector 130 having the curved portion 131, flat plate portions 132 and 133, fixing portions 134, and engaging portions 135 as described above can be manufactured by, for example, bending a metal plate obtained by performing punching processing to stamp a sheet metal to the radius R of curvature along the cylindrical axis C, which is vertical. The metal plate may be made of, for example, aluminum.

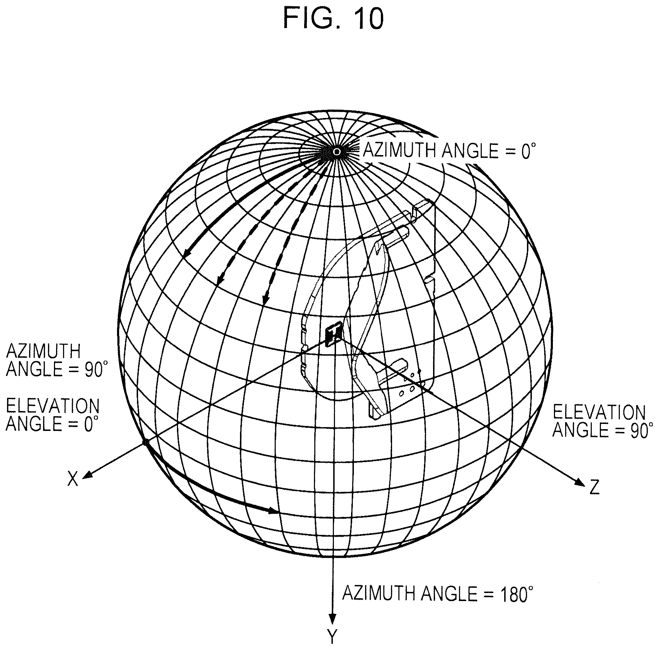

Fig. 10 is a drawing indicating an evaluation coordinate system for the detection device 100. Since the detection device 100 includes the antenna device 100A, evaluation results for the detection device 100 will be described below. Descriptions will be given below, assuming that, as indicated in Fig. 10, the XYZ coordinate system is the same as the XYZ coordinate system indicated in Fig. 1 to Fig. 9 and that the origin matches the center 120C (see Fig. 7(B)) on the upper surface of the transmission and reception device 120.

The evaluation coordinate system is a polar coordinate system. The azimuth angle indicates an angle in a direction indicated by an arrow with the -Y direction taken as a reference (0 degree). Therefore, the azimuth angle in the +X direction is 90 degrees and the azimuth angle in the +Y direction is 180 degrees. The azimuth angle in the -X direction is 270 degrees and is also -90 degrees. The elevation angle indicates an angle in a direction indicated by an arrow with the +X direction taken as a reference (0 degree). Therefore, the elevation angle in the +Z direction is 90 degrees and the azimuth angle in the -Z direction is - 90.

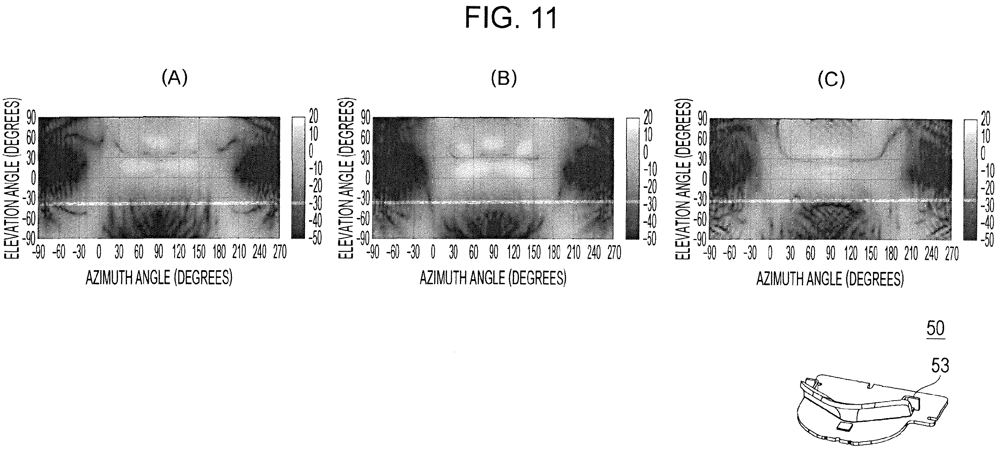

Fig. 11 is a drawing indicating simulation results for emission strength of the detection device 100. In Fig. 11(A) to Fig. 11(C), the horizontal axis indicates the azimuth angle (degrees) and the vertical axis indicates the elevation angle (degrees). In Fig. 11(A) to Fig. 11(C), it is represented that the brighter, the higher emission strength is, and that the darker, the lower emission strength is. Also, a detection device 50 for comparison purposes is indicated below the simulation result of emission strength in Fig. 11(C). The detection device 50 for comparison purposes has a reflector 53 for which a reflecting surface equivalent to the convexly curved surface 131S of the curved portion 131 of the reflector 130 and to the surfaces 132S and 133S of the flat plate portions 132 and 133 is a parabolic surface.

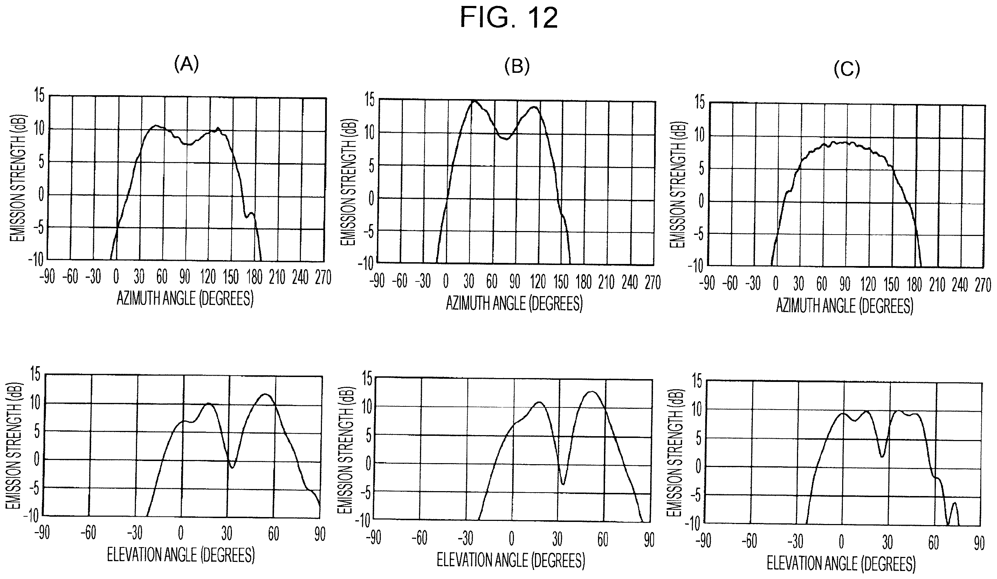

Fig. 12 is a drawing indicating simulation results for emission strength of the detection device 100. In Fig. 12(A) to Fig. 12(C), the characteristics of emission strength (dB) with respect to the azimuth angle in a plane with an elevation angle of 10 degrees are indicated at the upper stage and the characteristics of emission strength with respect to the elevation angle in an XZ plane are indicated at the lower stage. An XZ plane is a plane with an azimuth angle of 90 degrees.

Fig. 11(A) and Fig. 12(A) indicate emission strength for a simulation model for which the radius vector R of the curved portion 131 is 7.5 mm and the angle θ of the letter V of the reflector 130 is 120 degrees. Fig. 11(B) and Fig. 12(B) indicate emission strength for a simulation model for which the radius vector R of the curved portion 131 is 7.5 mm and the angle θ of the letter V of the reflector 130 is 150 degrees. Also, Fig. 11(C) and Fig. 12(C) indicate emission strength in simulation results for the detection device 50 for comparison purposes.

When Fig. 11(A) and Fig. 12(A) as well as Fig. 11(B) and Fig. 12(B) are compared with Fig. 11(C) and Fig. 12(C), it is found for the azimuth angle that emission strength is improved in a range from 40 degrees to 50 degrees and in a range from 130 degrees to 140 degrees. Since the detection device 100 is provided in the interior of the rear bumper of a vehicle at the center in the width direction of the vehicle, the range of the azimuth angle from 40 degrees to 50 degrees and the range of the azimuth angle from 130 degrees to 140 degrees are respectively equivalent to a lower left direction and lower right direction of the rear bumper of the vehicle. The range of the azimuth angle from 40 degrees to 50 degrees and the range of the azimuth angle from 130 degrees to 140 degrees are a wide-angle range in angles at which radio waves that are emitted from the antenna 121 and are reflected by the reflector 130 propagate in an XY plane, the wide-angle range being a range of wide angles with respect to the direction at an azimuth angle of 90 degrees. The direction at an azimuth angle of 90 degrees is the direction of the front of the reflector 130. The wide-angle range is a range in which angles with respect to direction of the front of the reflector 130 are relatively large.

Also, as for characteristics for the elevation angle, the detection device 100 and the detection device 50 for comparison purposes exhibited equivalent emission strength, as seen from the characteristics at the lower stage in Fig. 12(A), Fig. 12(B), and Fig. 11(C).

Due to this, it was found that the detection device 100 can cause a reflected wave to reach a farther distance in a lower left direction and lower right direction of the rear bumper of the vehicle, when compared with the detection device 50 for comparison purposes. The detection device 100 can detect the toes of the user in a wider range in the left-right direction.

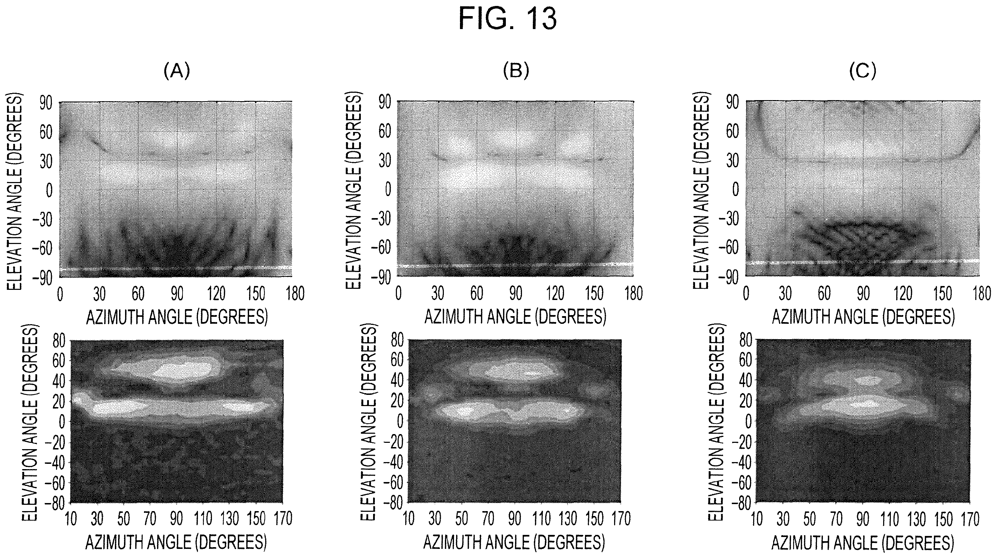

Fig. 13 is a drawing indicating emission strength of the detection device 100. In Fig. 13, for comparison of actual measurement results with simulation results, the simulation results indicated in Fig. 11(A) to Fig. 11(C) are indicated at the upper stage in Fig. 13(A) to Fig. 13(C) and the actual measurement results are indicated at the lower stage.

In Fig. 13(A) to Fig. 13(C), the horizontal axis indicates the azimuth angle (degrees) and the vertical axis indicates the elevation angle (degrees). In Fig. 13(A) to Fig. 13(C), it is represented that the brighter, the higher emission strength is and that the darker, the lower emission strength is.

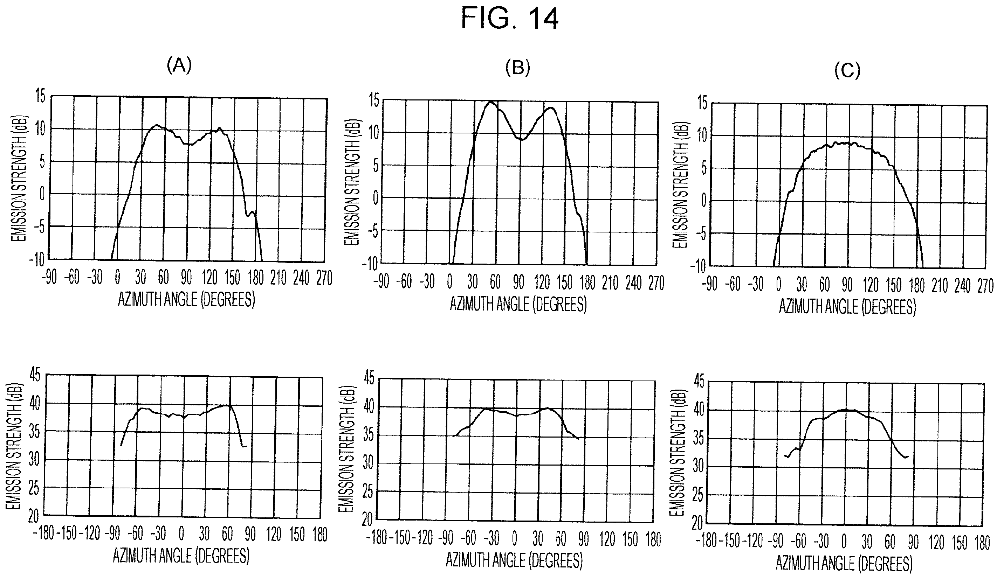

Fig. 14 is a drawing indicating actual measurement results for the characteristics of emission strength with respect to the azimuth angle of the detection device 100. In Fig. 14, for comparison of actual measurement results with simulation results, the simulation results, indicated in Fig. 12(A) to Fig. 12(C), of the characteristics of emission strength with respect to the azimuth direction of the detection device 100 are indicated at the upper stage in Fig. 14(A) to Fig. 14(C) and the actual measurement results are indicated at the lower stage. The actual measurement results are the characteristics of emission strength with respect to the azimuth direction in a plane with an elevation angle of 10 degrees, as with the simulation results.

Fig. 13(A) and Fig. 14(A) indicate emission strength for the detection device 100 for which the radius vector R of the curved portion 131 is 7.5 mm and the angle θ of the letter V of the reflector 130 is 120 degrees. Fig. 13(B) and Fig. 14(B) indicate emission strength for the detection device 100 for which the radius vector R of the curved portion 131 is 7.5 mm and the angle θ of the letter V of the reflector 130 is 150 degrees. Also, Fig. 13(C) and Fig. 14(C) indicate emission strength for the detection device 50 for comparison purposes.

When the simulation results at the upper stage in Fig. 13(A) to Fig. 13(C) and the actual measurement results at the lower stage are compared, it can be confirmed that the simulation results and actual measurement results represent similar results in the detection device 100 with the angle θ of the letter V being 120 degrees, the detection device 100 with the angle θ of the letter V being 150 degrees, and the detection device 50 for comparison purposes.

Also, the actual measurement results in Fig. 13(A) and Fig. 14(A) as well as Fig. 13(B) and Fig. 14(B) are compared with the actual measurement results in Fig. 13(C) and Fig. 14(C), it is found that emission strength is improved in a range from 40 degrees to 50 degrees and in a range from 130 degrees to 140 degrees.

From the actual measurement results like this, it could be confirmed that the detection device 100 can cause a reflected wave to reach a farther distance in a lower left direction and lower right direction of the rear bumper of the vehicle, when compared with the detection device 50 for comparison purposes. It could be confirmed that the detection device 100 can detect the toes of the user in wider ranges in the left-right direction and can operate the electric opener in wider ranges in the left-right direction.

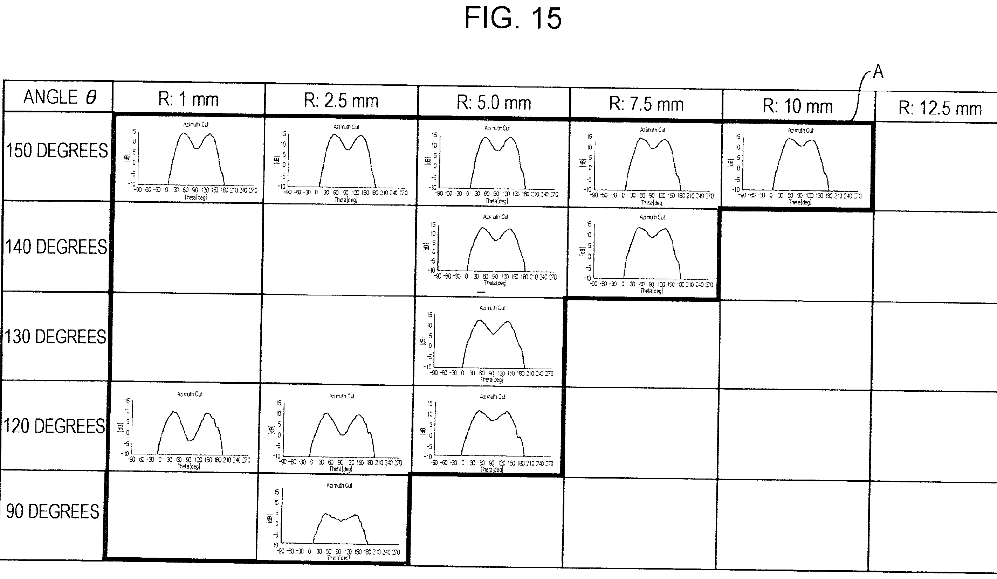

Fig. 15 is a drawing indicating simulation results obtained in combinations of various radius vectors R and various angles θ of the letter V. In Fig. 15, simulation results of the characteristics of emission strength with respect to the azimuth angle in a plane with an elevation angle of 10 degrees are indicated. The radius vector R was set to 1 mm, 2.5 mm, 5.0 mm, 7.5mm, and 10 mm. The angle θ of the letter V was set to 150 degrees, 140 degrees, 130 degrees, 120 degrees, and 90 degrees.

In combinations in the range enclosed by bold lines A, emission strength was higher than the emission strength of the detection device 50 for comparison purposes (see the characteristics at the upper stage in Fig. 12(C)) on wide-angle sides such as a range of azimuth angles of 40 degrees to 50 degrees and a range of azimuth angles of 130 degrees to 140 degrees, these ranges being equivalent to the lower-left direction and lower-right direction of the rear bumper of the vehicle. Incidentally, a blank in the range enclosed by the bold lines A indicates a combination for which simulation was not performed. Also, characteristics for combinations outside the range enclosed by the bold lines A will be omitted here.

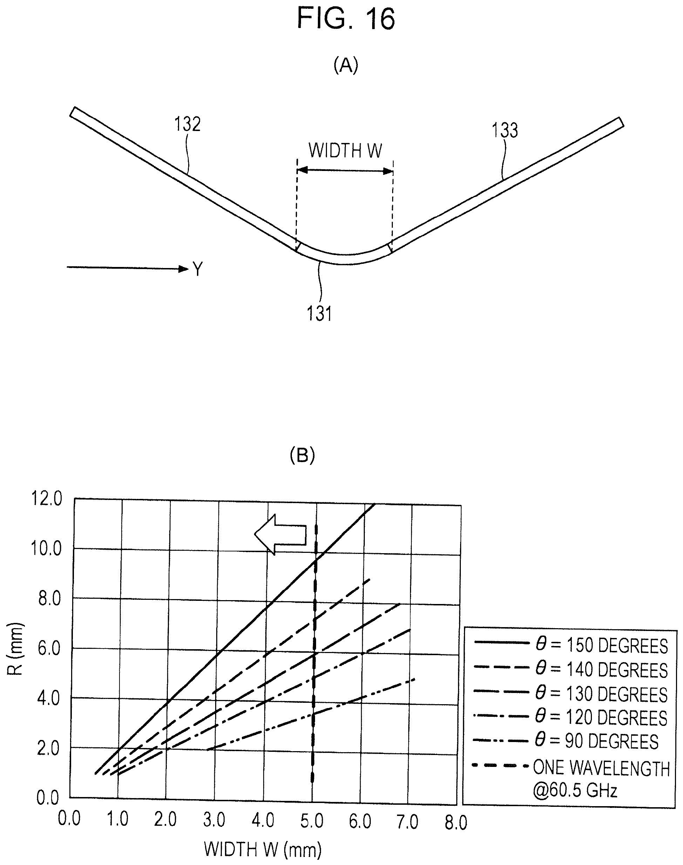

Fig. 16 is a drawing indicating the width W of the curved portion 131 and a relationship between the width W and the radius vector R. As indicated in Fig. 16(A), the width W of the curved portion 131 will be represented by the length of a segment in which the curved portion 131 is present in the Y direction. When the width W like this was used, the combinations in the range enclosed by the bold lines A in Fig. 15 were combinations in which the width W was shorter than or equal to one wavelength of wavelengths at the communication frequency of the transmission and reception device 120.

As indicated in Fig. 16(B), in the relationship between the width W and the radius vector R, the radius vector R tends to increase along with an increase in the width W as the angle θ of the letter V becomes larger. At 60.5 GHz, the width W equivalent to one wavelength is 5 mm. The relationship between the radius vector R and the width W on the left side with respect to the bold line indicated by width W = 5 mm represents a combination of the width W and radius vector R in which emission strength is increased on the wide-angle sides. Therefore, to design the curved portion 131 by which the width W becomes shorter than or equal to one wavelength of wavelengths at 60.5 GHz, which is the communication frequency of the transmission and reception device 120, a combination of the radius vector R and the width W that is, for example, the width W that becomes shorter than or equal to 5 mm in Fig. 16(B) is suffice.

Incidentally, on wide-angle sides such as a range in which azimuth angles are from 40 degrees to 50 degrees and a range from 130 degrees to 140 degrees, a case in which emission strength becomes higher when compared with the detection device 50 for comparison purposes was not recognized when the width W is longer than one wavelength of wavelengths at the communication frequency of the transmission and reception device 120, when the angle θ of the letter V is greater than 150 degrees, and when the angle θ of the letter V is smaller than 90 degrees.

A reason for the result like this is that: when the width W is shorter than or equal to one wavelength, the curved portion 131 is narrow, so radio waves are likely to be reflected at the flat plate portions 132 and 133 and expand toward wide-angle sides; however when the width W is longer than one wavelength, the number of radio waves reflected by the curved portion 131 is increased and the number of radio waves reflected toward wide-angle sides by the flat plate portions 132 and 133 is reduced, so the strength of radio waves on the wide-angle sides is lowered. Also, a reason is that when the angle θ of the letter V is smaller than or equal to 90 degrees, radio waves reflected at the flat plate portions 132 and 133 are directed to the - X direction rather than to the +X direction, so the strength of radio waves reflected toward the wide-angle sides is lowered. Also, a reason is that when the angle θ of the letter V is greater than or equal to 150 degrees, even when the width W is shorter than or equal to one wavelength, the curved portion 131 approaches a flat surface, so the strength of radio waves reflected toward the wide-angle sides is lowered.

From this, it was found that, to increase emission strength on wide-angle sides such as a range of azimuth angles of 40 degrees to 50 degrees and a range of azimuth angles of 130 degrees to 140 degrees, these ranges being equivalent to the lower-left direction and lower-right direction of the rear bumper of the vehicle, the angle θ of the letter V is preferably greater than or equal to 90 degrees and the width W of the curved portion 131 is preferably shorter than or equal to one wavelength of wavelengths at the communication frequency of the transmission and reception device 120.

As described above, the reflector 130 has the curved portion 131 and flat plate portions 132 and 133. The curved portion 131 is curved at a certain curvature and protrudes toward the same side as the antenna 121 (antenna side). The curved portion 131 has the convexly curved surface 131S that reflects radio waves emitted by the antenna 121. The convexly curved surface 131S has a shape equivalent to a portion on the outer circumferential surface of a cylinder, the portion being included in a certain azimuth angle φ from the cylindrical axis C. The convexly curved surface 131S is inclined toward the same side as the antenna 121 with respect to the upper surface 111 of the circuit board 110.

Also, the flat plate portions 132 and 133 respectively have the surfaces 132S and 133S that reflect radios emitted by the antenna 121. The surfaces 132S and 133S extend from both side portions of the convexly curved surface 131S in the circumferential direction along the upper surface 111 of the circuit board 110, and form a V shape together with the convexly curved surface 131S. The convexly curved surface 131S and surfaces 132S and 133S are the reflecting surfaces of the reflector 130.

The reflector 130 like this, which is composed of the curved portion 131 having the convexly curved surface 131S and the flat plate portions 132 and 133 having the surfaces 132S and 133S, has a simple structure and is easy to design.

Therefore, it is possible to provide the antenna device 100A and detection device 100 having the reflector 130, which has a simple structure and is easy to design. It is also possible to provide an opening/closing unit control system and an occupant detection system that include the antenna device 100A and detection device 100 having the reflector 130, which has a simple structure and is easy to design. Also, since the reflector 130, which has a simple structure and is easy to design, is included, the reach distance of a radio wave reflected at the reflector 130 can be reliably prolonged in desired directions as in ranges of the wide-angle sides described above.

Also, since the convexly curved surface 131S is inclined with respect to the circuit board 110 so that at least part of the convexly curved surface 131S overlaps the antenna 121 in plan view, radio waves emitted by the antenna 121 can be reliably reflected at the reflector 130 and radio waves reflected at the detection target can be reliably reflected at the reflector 130 toward the antenna 121.

Also, since the convexly curved surface 131S and the surfaces 132S and 133S are continuous to each other, radio waves emitted by the antenna 121 and radio waves reflected at the detection target can be evenly reflected. Also, the design and manufacturing of the reflector 130 can be more easily performed.

Since the curved portion 131 has a shape in which a flat plate is curved, the design and manufacturing of the curved portion 131 can be more easily performed.

Also, since the flat plate, which becomes the curved portion 131, is a flat plate having the flat plate portions 132 and 133 at both ends of a portion that becomes the curved portion 131, the design and manufacturing of the reflector 130 can be more easily performed.

Also, since the width W of the curved portion 131 in the Y-axis direction, which is an example of a one-axis direction in which the curved portion 131 and flat plate portions 132 and 133 are arranged in plan view, is shorter than or equal to one wavelength of wavelengths at the communication frequency of the antenna, the reach distance of a radio wave reflected at the reflector 130 can be reliably prolonged in ranges of the wide-angle sides.

Also, since the angle formed by the surfaces 132S and 133S is greater than or equal to 90 degrees in plan view, the reach distance of a radio wave reflected at the reflector 130 can be reliably prolonged in ranges of the wide-angle sides.

Also, since the antenna 121 is an antenna that doubles as a transmission antenna for transmitting radio waves and a reception antenna for receiving radio waves, transmission and reception can be performed with one antenna 121. Therefore, the design and manufacturing of the reflector 130 can be more easily performed.

Also, since the antenna 121 has a transmission antenna for transmitting radio waves and a reception antenna for receiving radio waves, the transmission antenna and reception antenna being placed side by side, the design and manufacturing of the reflector 130 can be more easily performed in a structure in which the transmission antenna and reception antenna are different from each other.

The detection device 100 includes the antenna device 100A, the transmission circuit 122, the reception circuit 123, and the control unit 124, which functions as a detection unit that detects at least one of the presence of the detection target and its behavior according to a signal received by the reception circuit 123. Since the detection device 100 like this includes the reflector 130 composed of the curved portion 131 having the convexly curved surface 131S and the flat plate portions 132 and 133 having the surfaces 132S and 133S, the structure of the detection device 100 is simple and it can be easily designed.

Also, since the transmission circuit 122 and reception circuit 123 are integrally formed in an integrated circuit, it is possible to provide the detection device 100 with a simple structure.

Also, since the antenna 121 and the integrated circuit that implements the transmission circuit 122 and reception circuit 123 are integrally formed, it is possible to provide the detection device 100 with a simpler structure.

The detection device 100 further includes the lower case 10 and upper case 20 that form a cabinet having an attachment portion attachable at a lower portion of a door of the vehicle, inside the bumper of the vehicle, or in the interior of the room of the vehicle. The antenna device 100A, the transmission circuit 122, the reception circuit 123, and the control unit 124, which functions as the detection unit, are stored in the lower case 10 and upper case 20. Therefore, it is possible to provide the detection device 100 f in which the reflector 130, which is easy to design, is packaged.

Also, the control unit 124, which functions as the detection unit, detects at least one of the presence and behavior of the manipulator around the vehicle. Therefore, it is possible to provide the detection device 100 that can be used as an operation detection device for an electric opener for an opening/closing portion of a vehicle.

Incidentally, an aspect has been described above in which the curved portion 131 and flat plate portions 132 and 133 of the reflector 130 are manufactured by bending a metal plate in a flat-plate shape, as an example. However, the reflector 130 is not limited to a reflector manufactured by bending a metal plate in a flat-plate shape, and may be resinous. When the reflector 130 is resinous, it may be manufactured by plastic molding. Also, the reflector 130 is not limited to a flat-plate shape as described above. If the reflector 130 is an object that has the convexly curved surface 131S and surfaces 132S and 133S, the reflector 130 may have any shape. For example, the reflector 130 may be of box type or the like.

Also, an aspect has been described above in which the transmission and reception device 120 has the antenna 121 that can perform transmission and reception. However, the antenna 121 may have a structure in which the antenna 121 has a transmission antenna that transmits radio waves and a reception antenna that receives radio waves, and the transmission antenna and reception antenna are arranged side by side.

Also, an aspect has been described above in which the transmission and reception device 120 has the antenna 121. However, the antenna 121 may be provided separately from the transmission and reception device 120. An aspect has been described above in which the transmission and reception device 120 has the transmission circuit 122, reception circuit 123, and control unit 124. However, the transmission circuit 122, reception circuit 123, and control unit 124 may be provided separately from one another, or the transmission circuit 122 and reception circuit 123 may be separated from the control unit 124.

Also, an aspect has been described above in which the flat plate portions 132 and 133 have a symmetric shape (plane symmetry) in which they are mutual mirror images with respect to a plane that includes the straight line 131B of the curved portion 131 and is parallel to an XZ plane. However, if the flat plate portion 132 and flat plate portion 133 have the surfaces 132S and 133S that form the letter V in plan view and are inclined at the angle α when the surfaces 132S and 133S are cut along a plane parallel to an XZ plane, the flat plate portion 132 and flat plate portion 133 may have mutually different shapes.

So far, the antenna device, detection device, opening/closing unit control system, and occupant detection system in an exemplary embodiment in the present invention have been described. However, the present invention is not limited to specifically disclosed embodiments. Various variations and modifications are possible without departing from the scope of the claims.

### Reference Signs List

- 100: detection device
- 100A: antenna device
- 110: circuit board
- 120: transmission and reception device
- 120C: center
- 121: antenna
- 122: transmission circuit
- 123: reception circuit
- 130: reflector
- 131: curved portion
- 131S: convexly curved surface
- 131A1: vertex
- 131A2: vertex
- 131B: straight line
- 132, 133: flat plate portion
- 132S, 133S: surface

## Claims

1. A detection device (100) comprising:
an antenna device (100A) comprising an antenna (121);
a transmission circuit (122) that is configured to output a transmission signal to the antenna (121);
a reception circuit (123) that is configured to receive a reflected wave, which is the transmission signal reflected at a detection target; and
a detection unit (124) that is configured to detect at least one of presence and behavior of the detection target according to a signal received by the reception circuit (123), the antenna device (100A) comprising:
a circuit board (110); the antenna (121) placed on a surface (111) of the circuit board (110); and
a reflector (130) that is erected on the surface (111) of the circuit board (110) and extends along the surface (111); wherein
the reflector (130) has
a curved portion (131) that has a convexly curved surface (131S), which is curved at a certain curvature and protrudes toward the same side as the antenna (121), the convexly curved surface (131S) configured to reflect a radio wave emitted by the antenna (121), and
a first plane portion (132) and a second plane portion (133) that respectively have a first reflecting surface (132S) and a second reflecting surface (133S) that extend from both side portions of the convexly curved surface (131S) along the surface (111) of the circuit board (110), form a V shape together with the convexly curved surface (131S) in plan view, and are configured to reflect a radio wave emitted by the antenna (121),
the convexly curved surface (131S) has a shape equivalent to a portion on an outer circumferential surface of a cylinder (1), the portion being included in a certain azimuth angle from a cylindrical axis (C), and
the convexly curved surface (131S) is inclined toward the same side as the antenna (121) with respect to the circuit board (110).

2. The detection device (100) according to Claim 1, wherein the convexly curved surface (131S) is inclined with respect to the circuit board (110) so that at least part of the convexly curved surface (131S) overlaps the antenna (121) in a plan view.

3. The detection device (100) according to Claim 1 or 2, wherein the convexly curved surface (131S) and the first reflecting surface (132S) and second reflecting surface (133S) are continuous to each other.

4. The detection device (100) according to any one of Claims 1 to 3, wherein the curved portion (131) has a shape in which a flat plate is curved.

5. The detection device (100) according to Claim 4, wherein the flat plate is a flat plate having the first plane portion (132) and the second plane portion (133) at both ends of a portion that is the curved portion (131).

6. The detection device (100) according to any one of Claims 1 to 5, wherein a width (W) of the curved portion (131) in a one-axis direction in which the curved portion (131), the first plane portion (132), and the second plane portion (133) are arranged in a plan view, is shorter than or equal to one wavelength of wavelengths at a communication frequency of the antenna (121).

7. The detection device (100) according to any one of Claims 1 to 6, wherein the antenna (121) is an antenna that doubles as a transmission antenna for transmitting a radio wave and a reception antenna for receiving a radio wave.

8. The detection device (100) according to any one of Claims 1 to 6, wherein the antenna (121) has a transmission antenna for transmitting a radio wave and a reception antenna for receiving a radio wave, the transmission antenna and the reception antenna being placed side by side.

9. The detection device (100) according to Claims 1 to 8, wherein the detection device (100) comprises an integrated circuit such that the transmission circuit (122) and the reception circuit (123) are integrally formed in the integrated circuit.

10. The detection device (100) according to Claim 9, wherein the antenna (121) and the integrated circuit are integrally formed.

11. The detection device (100) according to any one of Claims 1 to 10, further comprising a cabinet (10, 20) having an attachment portion (21, 22) attachable at a lower portion of a door of a vehicle, inside a bumper of the vehicle, or in an interior of a room of the vehicle, wherein
the antenna device (100A), the transmission circuit (122), the reception circuit (123), and the detection unit (124) are stored in the cabinet (10, 20).

12. The detection device (100) according to Claim 11, wherein the detection unit (124) is configured to detect at least one of presence and behavior of a manipulator around the vehicle.

13. An opening/closing unit control system comprising:
the detection device (100) according to Claim 12; and
a control unit (300) configured to control opening and closing of an opening/closing portion of the vehicle according to a detection result of the detection unit (124).

14. An occupant detection system comprising;
the detection device (100) according to Claim 12; and
an occupant detection unit (300) configured to detect presence or absence of an occupant in a room of a vehicle according to a detection result of the detection unit (124).

## Patentansprüche

1. Detektionsvorrichtung (100), aufweisend:
eine Antennenvorrichtung (100A) mit einer Antenne (121);
eine Sendeschaltung (122), die dazu ausgebildet ist, ein Sendesignal an die Antenne (121) auszugeben;
eine Empfangsschaltung (123), die dazu ausgebildet ist, eine reflektierte Welle zu empfangen, bei der es sich um das an einem Detektionsziel reflektierte Sendesignal handelt; und
eine Detektionseinheit (124), die dazu ausgebildet ist, mindestens eines von der Anwesenheit und dem Verhalten des Detektionsziels in Abhängigkeit von einem von der Empfangsschaltung (123) empfangenen Signal zu detektieren, wobei die Antennenvorrichtung (100A) aufweist:
eine Leiterplatte (110);
die Antenne (121), die auf einer Oberfläche (111) der Leiterplatte (110) platziert ist; und
einen Reflektor (130), der auf der Oberfläche (111) der Leiterplatte (110) errichtet ist und sich entlang der Oberfläche (111) erstreckt;
wobei der Reflektor (130) aufweist:
einen gekrümmten Bereich (131), der eine konvex gekrümmte Oberfläche (131S) aufweist, die mit einer bestimmten Krümmung gekrümmt ist und zur gleichen Seite wie die Antenne (121) ragt, wobei die konvex gekrümmte Oberfläche (131S) dazu ausgebildet ist, eine von der Antenne (121) ausgesendete Funkwelle zu reflektieren, und
einen ersten ebenen Bereich (132) und einen zweiten ebenen Bereich (133), die eine erste reflektierende Oberfläche (132S) bzw. eine zweite reflektierende Oberfläche (132S) aufweisen, die sich von beiden Seitenbereichen der konvex gekrümmten Oberfläche (131S) entlang der Oberfläche (111) der Leiterplatte (110) erstrecken, zusammen mit der konvex gekrümmten Oberfläche (131S) in der Draufsicht eine V-Form bilden und dazu ausgebildet sind, eine von der Antenne (121) ausgesendete Funkwelle zu reflektieren,
wobei die konvex gekrümmte Oberfläche (131S) eine Form äquivalent zu einem Bereich auf einer Außenumfangsfläche eines Zylinders (1) aufweist, wobei der Bereich in einem bestimmten Azimutwinkel von einer Zylinderachse (C) enthalten ist, und
wobei die konvex gekrümmte Oberfläche (131S) in Bezug auf die Leiterplatte (110) in Richtung auf die gleiche Seite wie die Antenne (121) geneigt ist.

2. Detektionsvorrichtung (100) nach Anspruch 1,
wobei die konvex gekrümmte Oberfläche (131S) in Bezug auf die Leiterplatte (110) derart geneigt ist, dass mindestens ein Teil der konvex gekrümmten Oberfläche (131S) die Antenne (121) in der Draufsicht überlappt.

3. Detektionsvorrichtung (100) nach Anspruch 1 oder 2,
wobei die konvex gekrümmte Oberfläche (131S) sowie die erste reflektierende Oberfläche (132S) und die zweite reflektierende Oberfläche (133S) kontinuierlich miteinander ausgebildet sind.

4. Detektionsvorrichtung (100) nach einem der Ansprüche 1 bis 3,
wobei der gekrümmte Bereich (131) eine Form aufweist, bei der eine ebene Platte gekrümmt ist.

5. Detektionsvorrichtung (100) nach Anspruch 4,
wobei es sich bei der ebenen Platte um eine ebene Platte handelt, die an beiden Enden eines Bereichs, der den gekrümmten Bereich (131) bildet, den ersten ebenen Bereich (132) und den zweiten ebenen Bereich (133) aufweist.

6. Detektionsvorrichtung (100) nach einem der Ansprüche 1 bis 5,
wobei eine Breite (W) des gekrümmten Bereichs (131) in einer Achsenrichtung, in der der gekrümmte Bereich (131), der erste ebene Bereich (132) und der zweite ebene Bereich (133) in der Draufsicht angeordnet sind, kürzer oder gleich einer Wellenlänge von Wellenlängen bei einer Kommunikationsfrequenz der Antenne (121) ist.

7. Detektionsvorrichtung (100) nach einem der Ansprüche 1 bis 6,
wobei es sich bei der Antenne (121) um eine Antenne handelt, die sowohl als Sendeantenne zum Senden einer Funkwelle als auch als Empfangsantenne zum Empfangen einer Funkwelle dient.

8. Detektionsvorrichtung (100) nach einem der Ansprüche 1 bis 6,
wobei die Antenne (121) eine Sendeantenne zum Senden einer Funkwelle und eine Empfangsantenne zum Empfangen einer Funkwelle aufweist, wobei die Sendeantenne und die Empfangsantenne nebeneinander angeordnet sind.

9. Detektionsvorrichtung (100) nach einem der Ansprüche 1 bis 9,
wobei die Detektionsvorrichtung (100) eine integrierte Schaltung aufweist, so dass die Sendeschaltung (122) und die Empfangsschaltung (123) in der integrierten Schaltung in integraler Weise ausgebildet sind.

10. Detektionsvorrichtung (100) nach Anspruch 9,
wobei die Antenne (121) und die integrierte Schaltung in integraler Weise ausgebildet sind.

11. Detektionsvorrichtung (100) nach einem der Ansprüche 1 bis 10,
die ferner ein Gehäuse (10, 20) mit einem Befestigungsbereich (21, 22) aufweist, der an einem unteren Bereich einer Tür eines Fahrzeugs, im Inneren eines Stoßfängers des Fahrzeugs oder im Inneren eines Raums des Fahrzeugs angebracht werden kann, wobei die Antennenvorrichtung (100A), die Sendeschaltung (122), die Empfangsschaltung (123) und die Detektionseinheit (124) in dem Gehäuse (10, 20) untergebracht sind.

12. Detektionsvorrichtung (100) nach Anspruch 11,
wobei die Detektionseinheit (124) dazu ausgebildet ist, mindestens eines von der Anwesenheit und dem Verhalten eines Manipulators im Umfeld des Fahrzeugs zu detektieren.

13. Öffnungs-/Schließeinheits-Steuerungssystem, aufweisend:
die Detektionsvorrichtung (100) nach Anspruch 12; und
eine Steuereinheit (300), die dazu ausgebildet ist, das Öffnen und Schließen eines zu öffnenden/schließenden Bereichs des Fahrzeugs in Abhängigkeit von einem Detektionsresultat der Detektionseinheit (124) zu steuern.

14. Insassendetektionssystem, aufweisend:
die Detektionsvorrichtung (100) nach Anspruch 12; und
eine Insassendetektionseinheit (300), die dazu ausgebildet ist, die Anwesenheit oder Abwesenheit eines Insassen in einem Raum eines Fahrzeugs in Abhängigkeit von einem Detektionsresultat der Detektionseinheit (124) zu detektieren.

## Revendications

1. Dispositif de détection (100) comprenant :
un dispositif d'antenne (100A) comprenant une antenne (121) ;
un circuit d'émission (122) configuré de manière à transmettre un signal d'émission à l'antenne (121) ;
un circuit de réception (123) configuré de manière à recevoir une onde réfléchie, qui est le signal d'émission réfléchi par une cible de détection ; et
une unité de détection (124) configurée de manière à détecter au moins l'un ou l'autre de la présence et du comportement de la cible de détection en fonction d'un signal reçu par le circuit de réception (123), le dispositif d'antenne (100A) comprenant :
un circuit imprimé (110) ;
l'antenne (121) placée sur une surface (111) du circuit imprimé (110) ; et
un réflecteur (130) qui est monté sur la surface (111) du circuit imprimé (110) et s'étend le long de cette surface (111) ; dans lequel
le réflecteur (130) comporte
une partie courbée (131) ayant une surface à courbure convexe (131S), qui présente une certaine courbure et fait saillie vers le même côté que l'antenne (121), la surface à courbure convexe (1318) étant configurée de manière à réfléchir une onde radio émise par l'antenne (121), et
une première partie plane (132) et une deuxième partie plane (133) qui présentent respectivement une première surface réfléchissante (132S) et une deuxième surface réfléchissante (133S) qui s'étendent
depuis les deux parties latérales de la surface à courbure convexe (131S) le long de la surface (111) du circuit imprimé (110), forment ensemble un V avec la surface à courbure convexe (131S) selon une vue en plan, et sont configurées de manière à réfléchir une onde radio émise par l'antenne (121),
la surface à courbure convexe (131S) présente une forme équivalente à une partie située sur une surface circonférentielle extérieure d'un cylindre (1), la partie étant comprise dans un certain angle d'azimut par rapport à un axe cylindrique (C), et
la surface à courbure convexe (131S) est inclinée du même côté que l'antenne (121) par rapport au circuit imprimé (110).

2. Le dispositif de détection (100) selon la revendication 1, dans lequel la surface à courbure convexe (131S) est inclinée par rapport au circuit imprimé (110) de telle sorte qu'au moins une partie de la surface à courbure convexe (131S) recouvre l'antenne (121)selon une vue en plan.

3. Le dispositif de détection (100) selon la revendication 1 ou 2, dans lequel la surface à courbure convexe (131S) ainsi que la première surface réfléchissante (132S) et la deuxième surface réfléchissante (133S) sont contiguës.

4. Le dispositif de détection (100) selon l'une quelconque des revendications 1 à 3, dans lequel la partie courbée (131) présente une forme dans laquelle une plaque plate est courbée.

5. Le dispositif de détection (100) selon la revendication 4, dans lequel la plaque plate est une plaque plate où la première partie plane (132) et la deuxième partie plane (133) sont aux deux extrémités d'une partie qui constitue la partie courbée (131).

6. Le dispositif de détection (100) selon l'une quelconque des revendications 1 à 5, dans lequel une largeur (W) de la partie courbée (131) dans une direction uniaxiale dans laquelle la partie courbée (131), la première partie plane (132) et la deuxième partie plane (133) sont disposées selon une vue en plan, est inférieure ou égale à l'une des longueurs d'onde à la fréquence de communication de l'antenne (121).

7. Le dispositif de détection (100) selon l'une quelconque des revendications 1 à 6, dans lequel l'antenne (121) est une antenne qui sert à la fois d'antenne d'émission pour transmettre une onde radio et d'antenne de réception pour recevoir une onde radio.

8. Le dispositif de détection (100) selon l'une quelconque des revendications 1 à 6, dans lequel l'antenne (121) comporte une antenne d'émission pour transmettre une onde radio et une antenne de réception pour recevoir une onde radio, l'antenne d'émission et l'antenne de réception étant placées côte à côte.

9. Le dispositif de détection (100) selon les revendications 1 à 8, dans lequel le dispositif de détection (100) comprend un circuit intégré tel que le circuit d'émission (122) et le circuit de réception (123) sont formés d'un seul tenant dans ledit circuit intégré.

10. Le dispositif de détection (100) selon la revendication 9, dans lequel l'antenne (121) et le circuit intégré sont formés d'un seul tenant.

11. Le dispositif de détection (100) selon l'une quelconque des revendications 1 à 10, comprenant en outre un boîtier (10, 20) muni d'une partie de fixation (21, 22) pouvant être fixée sur la partie inférieure d'une porte d'un véhicule, à l'intérieur d'un pare-chocs du véhicule ou à l'intérieur de l'habitacle du véhicule, dans lequel
le dispositif d'antenne (100A), le circuit d'émission (122), le circuit de réception (123) et l'unité de détection (124) sont logés dans le boîtier (10, 20).

12. Le dispositif de détection (100) selon la revendication 11, dans lequel l'unité de détection (124) est configurée de manière à détecter au moins l'un ou l'autre de la présence et du comportement d'un manipulateur à proximité du véhicule.

13. Système de commande d'unité d'ouverture et de fermeture comprenant :
le dispositif de détection (100) selon la revendication 12 ; et
une unité de commande (300) configurée de manière à commander l'ouverture et la fermeture d'une partie d'ouverture/fermeture du véhicule en fonction d'un résultat de détection de l'unité de détection (124).

14. Système de détection de passager comprenant :
le dispositif de détection (100) selon la revendication 12 ; et
une unité de détection de passager (300) configurée de manière à détecter la présence ou l'absence d'un passager dans l'habitacle d'un véhicule en fonction d'un résultat de détection de l'unité de détection (124).
